# FASCICULE DE BREVET EUROPEEN

(11) **EP 0 382 646 B1**
(45) Date de publication et mention de la délivrance du brevet: **24.11.1993**
(21) Numéro de dépôt: 90400362.1
(22) Date de dépôt: 09.02.1990
(51) Int. Cl.: H04M 3/24, H04Q 11/04

(54) **Emulateurs de terminaison numérique de réseau et systèmes de contrôle et mesure de bus**
Digital-Netzabschlussemulatoren und Busüberwachungs- und Messsysteme
Emulators of a digital network terminal and bus test and measurement systems

(30) Priorité: 10.02.1989 FR 8901761
(43) Date de publication de la demande: 16.08.1990
(73) Titulaire: FRANCE TELECOM, 75015 Paris (FR)
(72) Inventeur: Delisle, Dominique, F-22300 Lannion (FR); Fieau, Jean-Claude, F-22700 Perros Guirec (FR); Fort, Joseph, F-22700 Louannec (FR)
(74) Mandataire: Cabinet Martinet & Lapoux

(56) Documents cités:
- SIEMENS TELCOM REPORT, vol. 11, no. 2, mars-avril 1988, pages 61-64, Berlin& Munich, DE; A. KAMCKE: "Leitungsdiagnose und Fehleranalyse für sicheren Protokollablauf"
- ELECTRICAL COMMUNICATION, vol. 61, no. 1, 7 mars 1987, pages 97-103, Harlow,Essex, GB; W. KIRCHNER et al.: "ISDN D channel protocol simulator"

## Description

La présente invention concerne de manière générale le contrôle et la mesure de caractéristiques d'un bus de transmission. Plus particulièrement, l'invention concerne des émulateurs de terminaison numérique de réseau et des systèmes de contrôle et mesure de bus pour des bus distribués de régies d'abonné dans des réseaux numériques à intégration de services (RNIS).

Dans un réseau de type RNIS, une régie d'abonné passive est constituée d'un bus distribué relié à une terminaison numérique de réseau et à une pluralité de prises de connexion banalisées réparties dans les locaux de l'abonné et auxquelles sont connectés des terminaux. Le bus convoie des trames numériques de signaux multiplexés relatifs à différentes communications et peut atteindre une longueur importante de l'ordre du kilomètre. Le bon fonctionnement de la régie requiert que le bus satisfasse à des caractéristiques précises qu'il est nécessaire de vérifier préalablement à la mise en service de la régie et lors d'opérations de maintenance.

Actuellement, le réseau RNIS est en cours de mise en place progressive et les problèmes suivants sont fréquemment rencontrés par les agents d'installation, notamment lorsque la régie est composée en partie de câbles initialement en place dans les locaux de l'abonné et qui ont été réutilisés pour des raisons de coûts :
- croisement des fils de paires entre différentes prises de connexion,
- résistances de contact prohibitives dans les prises de connexion,
- impédances de câbles inadaptées,
- diaphonie due à des mauvais appairages et à des défauts d'isolement entre des fils du bus,
- dissymétrie par rapport à la terre des potentiels des fils d'une même paire,
- présence de potentiels perturbateurs continus et/ou alternatifs dans les fils du bus, et
- perturbations momentanées des communications dues à des interférences électromagnétiques.

Il n'existe pas dans le commerce d'appareillage spécifique de contrôle et mesure susceptible de répondre aux besoins et les agents d'installation ont essentiellement recours à des appareillages de contrôle et mesure classiques tels que multimètres, mégohmmètres et oscilloscopes. D'autres appareils pourraient éventuellement être utilisés tels qu'échomètres, mesureurs de diaphonie et mesureurs d'erreurs de transmission. Néanmoins, ces appareils sont des appareils de laboratoire fragiles et coûteux, peu adaptés à une utilisation de terrain, et de plus d'un maniement pas toujours accessible à des agents d'installation.

La présente invention vise à fournir des émulateurs de terminaison numérique de réseau et des systèmes de contrôle et mesure de bus conçus pour la vérification des bus de transmission, ainsi que pour apporter une aide à la localisation des défauts éventuels et indiquer à l'opérateur les interventions à réaliser pour mettre en conformité les bus avec des spécifications exigées.

A cette fin, un émulateur selon l'invention pour transmettre, recevoir, et traiter des trames numériques de test afin notamment de contrôler et mesurer des caractéristiques d'un bus de régie d'abonné, est caractérisé en ce qu'il comprend
des moyens pour multiplexer des premiers mots numériques de test en des trames descendantes de test,
des moyens de transmission de ligne reliés au bus pour y transmettre les trames descendantes vers des dispositifs terminaux de bouclage fonctionnant en écho, connectés au bus,
des moyens de réception de ligne reliés au bus pour recevoir des trames montantes de test transmises par les dispositifs terminaux en réponse à la réception des trames descendantes,
des moyens pour démultiplexer les trames montantes en des seconds mots numériques de test,
une base de temps pour produire des horloges de transmission et de réception destinées respectivement aux moyens pour multiplexer et pour démultiplexer,
des moyens internes de contrôle reliés aux moyens pour multiplexer et pour démultiplexer, et à la base de temps pour contrôler le fonctionnement de ces éléments en fonction de commandes délivrées par un opérateur, et
des moyens internes de traitement délivrant les premiers mots et recevant les seconds mots pour traiter les seconds mots en fonction des premiers mots afin de détecter des liaisons de télécommunications défectueuses entre l'émulateur et les dispositifs terminaux et de déduire les caractéristiques recherchées du bus.

De préférence, la base de temps comprend des moyens commandés par les moyens de contrôle pour produire une pluralité de signaux d'horloge décalés deux à deux d'une fraction d'intervalle temporel de bit de durée prédéterminée et pour sélectionner les horloges de transmission et de réception parmi lesdits signaux d'horloge, et des moyens commandés par les moyens de contrôle pour insérer dans l'horloge de réception au moins une impulsion d'horloge supplémentaire afin de décaler le démultiplexage des trames montantes d'au moins un intervalle temporel de bit, lesdits moyens pour produire et pour insérer étant commandés par les moyens de contrôle de manière à décaler progressivement l'horloge de réception par rapport à l'horloge de transmission et à insérer des impulsions d'horloge supplémentaires jusqu'à une réception optimale des trames montantes. Les moyens de traitement peuvent quant à eux être programmés pour calculer des taux d'erreurs de transmission pour chacune des liaisons de télécommunications à partir des premiers et seconds mots transmis et reçus pendant une période de temps de durée prédéterminée.

Selon une variante, l'émulateur comprend également des moyens reliés aux moyens pour multiplexer et pour démultiplexer, à la base de temps, et aux moyens de contrôle, pour connecter l'émulateur à des moyens extérieurs de contrôle et de traitement se substituant partiellement ou totalement aux moyens internes de contrôle et de traitement de l'émulateur.

Un système selon l'invention pour contrôler et mesurer des caractéristiques d'un bus de régie d'abonné, ledit bus comprenant une pluralité de prises de connexion destinées à relier le bus à une terminaison numérique d'un réseau de télécommunications et à une pluralité de terminaux, est caractérisé en ce que ledit système comprend un équipement principal relié au bus de préférence en lieu et place de la terminaison numérique de réseau et incluant un émulateur selon l'invention, et au moins un dispositif de simulation de terminal connecté au bus pour simuler l'activité d'un terminal lorsque l'émulateur du système est actif et transmettre des trames montantes de test en réponse aux trames descendantes de test transmises par l'émulateur.

Selon l'invention, l'équipement principal comprend, outre l'émulateur, des premiers moyens pour mesurer dans le bus des valeurs de résistance et d'isolement galvanique,
des seconds moyens pour mesurer des taux de diaphonie entre des paires de transmission du bus, et
des moyens pour détecter dans le bus la présence de potentiels perturbateurs continus et/ou alternatifs.

De préférence, l'équipement principal comprend également une matrice de connexion ayant des premiers accès reliés au bus et des seconds accès reliés aux premiers et seconds moyens pour mesurer, aux moyens pour détecter, et à l'émulateur.

L'équipement principal et les dispositifs de simulation de terminal inclus dans le système selon l'invention se présentent sous des formes compactes et sont robustes et parfaitement adaptés pour une utilisation de terrain. Avantageusement, l'équipement principal est connectable à un terminal vidéotexte de type Minitel (marque déposée). Ce type de terminal vidéotexte étant généralement disponible chez l'abonné, il est utilisé comme moyen de dialogue homme-machine et le système de contrôle et mesure est ainsi allégé de la nécessité d'une console de dialogue spécifique.

D'autres caractéristiques et avantages de l'invention apparaîtront à la lecture de la description suivante de plusieurs réalisations préférées d'émulateurs et de systèmes de contrôle et mesure de bus selon l'invention en référence aux dessins annexés correspondants, dans lesquels :
- la Fig. 1 est un bloc-diagramme d'un système de contrôle et mesure de bus selon l'invention connecté à un bus distribué de régie d'abonné ;
- la Fig. 2 montre des structures de trames montantes et descendantes transmises dans le bus ;
- la Fig. 3 est un bloc-diagramme d'une unité de contrôle et mesure compris dans le système de contrôle et mesure montré à la Fig. 1 ;
- la Fig. 4 montre la structure d'une matrice de connexion comprise dans l'unité de contrôle et mesure représentée à la Fig. 3 ;
- la Fig. 5 est un bloc-diagramme d'un circuit de mesure de résistance et d'isolement galvanique compris dans l'unité représentée à la Fig. 3 ;
- la Fig. 6 est un bloc-diagramme d'un circuit de détection de potentiel perturbateur compris dans l'unité représentée à la Fig. 3 ;
- la Fig. 7 est un bloc-diagramme d'un circuit de mesure de diaphonie compris dans l'unité représentée à la Fig. 3 ;
- la Fig. 8 est un bloc-diagramme d'un émulateur selon l'invention inclus dans l'unité représentée à la Fig. 3 ;
- la Fig. 9 est un bloc-diagramme d'une base de temps comprise dans l'émulateur montré à la Fig. 8 ;
- les Figs. 10A et 10B montrent respectivement des formes d'onde d'une pluralité de signaux d'horloge retardés produits dans la base de temps de la Fig. 9 et un chronogramme relatif au fonctionnement d'un circuit d'insertion d'impulsion compris dans la base de temps de la Fig. 9 ; et
- la Fig. 11 est un bloc-diagramme de deux dispositifs de bouclage de canaux compris dans le système selon l'invention et destinés à être connectés au bus pour simuler des terminaux.

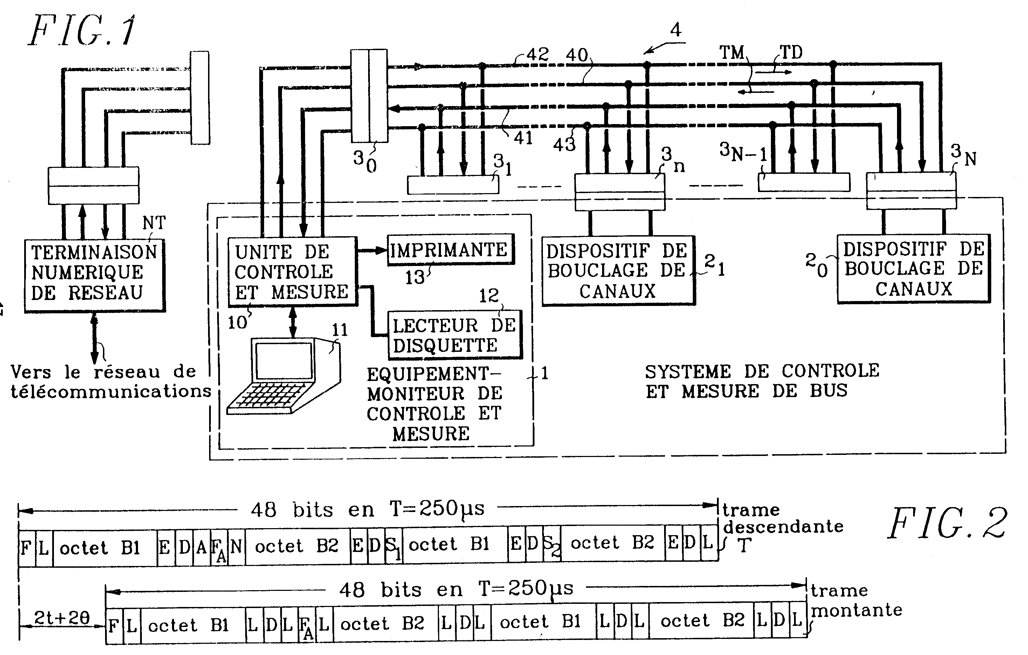

En référence à la Fig. 1, le système de contrôle et mesure de bus selon l'invention comprend essentiellement un équipement-moniteur de contrôle et mesure 1 également appelé équipement principal et au moins un dispositif de bouclage de canaux 2. Typiquement, le système comprend deux dispositifs de bouclage de canaux 2₀ et 2₁.

L'équipement-moniteur 1 comprend une unité de contrôle et mesure 10 à laquelle sont associés une console de dialogue 11 de préférence sous la forme d'un terminal vidéotexte Minitel, un lecteur de disquette 12, et une imprimante 13. L'unité de contrôle et mesure 10 est par exemple connectée à une première prise 3₀ d'un bus distribué 4 d'une régie d'abonné dont la conformité à des normes préétablies est à vérifier préalablement à sa connexion à une terminaison numérique de réseau NT d'un réseau de télécommunications de type RNIS.

Le bus 4 comprend typiquement quatre paires symétriques. Des première et seconde paires 40 et 41 sont prévues respectivement pour la transmission de trames descendantes TD et montantes TM. Des troisième et quatrième paires 42 et 43 sont également prévues pour des téléalimentations éventuelles entre la terminaison numérique de réseau NT et des terminaux de la régie d'abonné. Le bus 4 dessert une pluralité de prises 3₁ à 3_{N} analogues à la prise 3₀ et destinées au raccordement des terminaux à la régie d'abonné.

En référence à la Fig. 2, il est rappelé les structures connues de type 2B+D des trames descendantes TD et montantes TM transitant dans des régies d'abonné d'un réseau RNIS.

Les trames TD et TM ont une durée de T=250µs et sont composées typiquement de 48 bits chacune qui sont transmis au débit de 192 kbit/s et selon un code pseudo-ternaire de type HDLC. Les trames TD et TM convoient bidirectionnellement deux canaux B1 et B2 en mode circuit au débit de 64 kbit/s et un canal D en mode paquet au débit de 16 kbit/s. Les canaux B1 et B2 écoulent uniquement des débits de données. Le canal D écoule des débits de service par exemple relatifs à des demandes de connexion, ainsi que des débits de données.

Comme montré à une première ligne de la Fig. 2, une trame TD contient deux octets de canal B1, deux octets de canal B2, quatre bits de canal D, quatre bits d'un canal d'écho E, et différents bits, d'alignement et verrouillage de trame F et F_{A}, de téléactivation A, de canaux de réserve S1 et S2, et d'équilibrage L et N. Le canal d'écho E est un canal d'écho correspondant au canal D et est destiné aux terminaux de la régie afin de leur permettre une gestion d'accès au canal D selon la procédure connue CSMA-CR. Dans la trame descendante TD, les bits de canal d'écho E précèdent les bits de canal D correspondant et ont des états logiques égaux aux états logiques des bits de canal D d'une trame montante TM dont la réception par la terminaison numérique de réseau NT ou l'unité de contrôle et mesure 10 précède directement la transmission de ladite trame TD. Le bit A est utilisé afin de commander l'activation de terminaux de la régie lorsque la trame TD contient des informations qui leur sont destinées. Les bits S1 et S2 sont des bits de canaux de réserve disponibles pour d'éventuelles extensions des services. Les bits d'équilibrage L et N sont prévus afin d'apporter une compensation de la composante continue du signal de trame telle que ladite composante continue soit nulle.

Comme montré à une seconde ligne de la Fig. 2, la structure de la trame montante TM est analogue à celle de la trame descendante TD ; elle diffère toutefois en ce que les bits de canal d'écho E et les bits de canaux de réserve S1 et S2 qui n'ont plus lieu d'être sont remplacés par des bits d'équilibrage L.

La procédure de communication entre la terminaison numérique de réseau NT ou l'unité de contrôle et mesure 10 et les terminaux de la régie prévoit une relative synchronisation entre les trames TD et TM. Ainsi en réponse à une trame descendante TD reçue, un terminal de la régie transmet une trame montante TM avec un décalage constant de deux bits par rapport au début de la réception de la trame descendante TD. Si l'on considère la réception de la trame montante TM par la terminaison NT ou l'unité 10, le début de cette réception intervient un temps égal à 2t+2ϑ après le début de la transmission de la trame descendante TD correspondante, t et ϑ représentant respectivement la durée d'un intervalle temporel de bit et le temps de propagation entre la terminaison NT ou unité 10 et le terminal considéré.

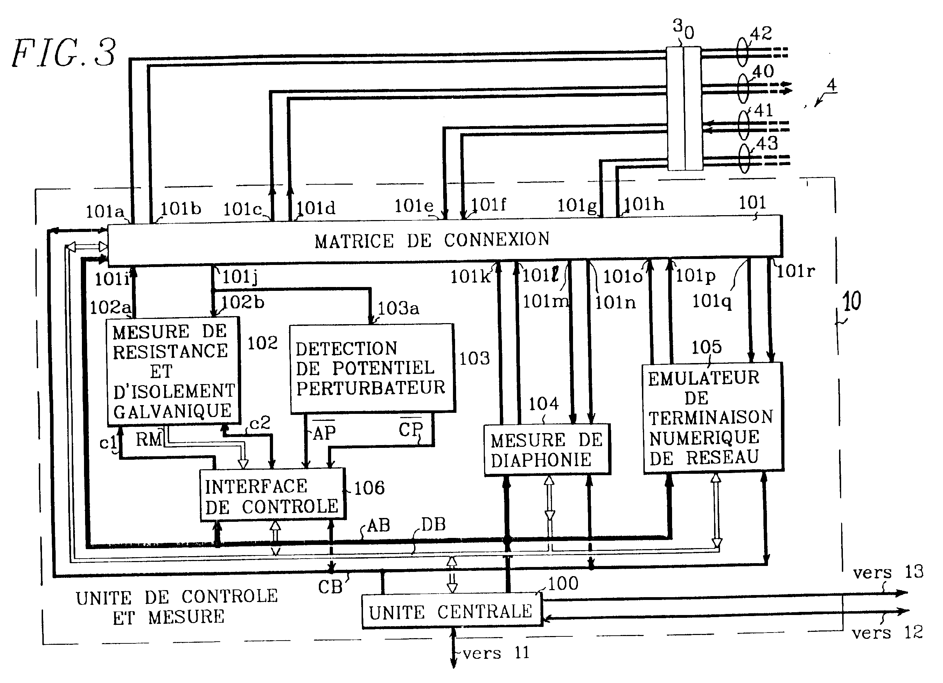

En référence à la Fig. 3, l'unité de contrôle et mesure 10 comprend essentiellement une unité centrale 100, une matrice de connexion 101, un circuit de mesure de résistance et d'isolement galvanique 102, un circuit de détection de potentiel perturbateur 103, un circuit de mesure de diaphonie 104, et un émulateur de terminaison numérique de réseau 105.

L'unité centrale 100 comprend de préférence un microprocesseur 16 bits auquel sont associés un ensemble de mémoires d'une capacité totale de 1 M d'octets ainsi que divers circuits notamment pour le contrôle de la console 11, du lecteur de disquette 12 et de l'imprimante 13. L'unité 100 commande les différents éléments 101 à 105 de l'unité de contrôle et mesure 10 à travers des bus de données DB, d'adresses AB, et de contrôle CB.

A la mise en fonctionnement du système, le contenu d'une disquette de programme est chargé dans l'ensemble de mémoires de l'unité 100 et l'opérateur a alors accès à différents menus qui lui permettent de choisir un test de contrôle ou une mesure à exécuter parmi une pluralité de tests de contrôle et de mesures disponibles, ainsi que de positionner des paramètres correspondants et de commander l'exécution du test ou de la mesure choisi.

La matrice de connexion 101 a pour fonction de relier sous la commande de l'unité centrale 100 l'un des éléments 102 à 105 de l'unité de contrôle et mesure 10 aux fils du bus 4. La matrice 101 comprend huit bornes 101a à 101h reliées à travers la prise 3₀ aux fils des paires 40 à 43 du bus 4, et dix bornes 101i à 101r reliées aux éléments 102 à 105 de l'unité 10.

Les circuits de mesure de résistance et d'isolement galvanique 102 et de détection de potentiel perturbateur 103 sont reliés aux bus DB, AB et CB à travers une interface de contrôle commune 106. La matrice 101, le circuit de mesure de diaphonie 104, et l'émulateur 105 sont équipés de leurs propres interfaces de contrôle et apparaissent directement reliés aux bus DB, AB et CB.

L'interface de contrôle 106 fournit au circuit 102 deux signaux de commande C1 et C2. Le signal C1 commande l'activation/désactivation du circuit 102. Le signal C2 commande des commutations dans le circuit 102 afin de positionner ledit circuit pour la mesure à exécuter, c'est-à-dire le positionner pour une mesure de continuité et résistance ou une mesure d'isolement galvanique. Le résultat de la mesure exécutée par le circuit 102 est fourni à l'unité centrale 100 sous la forme d'un mot numérique RM, à travers l'interface 106 et le bus de données DB. Des sortie et entrée de courant 102a et 102b du circuit 102 sont reliées respectivement aux bornes 101i et 101j de la matrice de connexion 101.

Le circuit de détection de potentiel perturbateur 103 comprend une entrée 103a reliée à la borne 101j de la matrice de connexion 101 et deux sorties délivrant respectivement deux signaux A̅P̅ et C̅P̅ qui sont fournis à l'interface 106. Les signaux A̅P̅ et C̅P̅ à l'état "0" indiquent la présence à l'entrée du circuit 102 respectivement d'un potentiel perturbateur alternatif et d'un potentiel perturbateur continu. L'information portée par les signaux A̅P̅ et C̅P̅ est incluse dans un mot numérique par l'interface 106 pour être transmise vers l'unité 100.

Le circuit de mesure de diaphonie 104 comprend deux bornes de transmission et deux bornes de réception reliées respectivement aux bornes 101k, 101l et 101m, 101n de la matrice 101. Afin de procéder à une mesure de diaphonie entre les paires 40 et 41 du bus 4, l'unité centrale 100 commande la connexion des bornes 101k, 101l et 101m, 101n de la matrice 101 respectivement avec les bornes 101c, 101d et 101e, 101f et le circuit de mesure de diaphonie 104.

L'émulateur de terminaison numérique de réseau 105 comprend deux bornes de transmission et deux bornes de réception reliées respectivement aux bornes 101o, 101p et 101q, 101r de la matrice 101. Afin de procéder à un test de fonctionnement dynamique du bus 4, l'unité centrale 100 commande la connexion des bornes 101o, 101p et 101q, 101r respectivement avec les bornes 101c, 101d et 101e, 101f, et l'émulateur 105 est alors relié aux paires 40 et 41 du bus 4 pour transmettre des trames descendantes TD et recevoir des trames montantes TM.

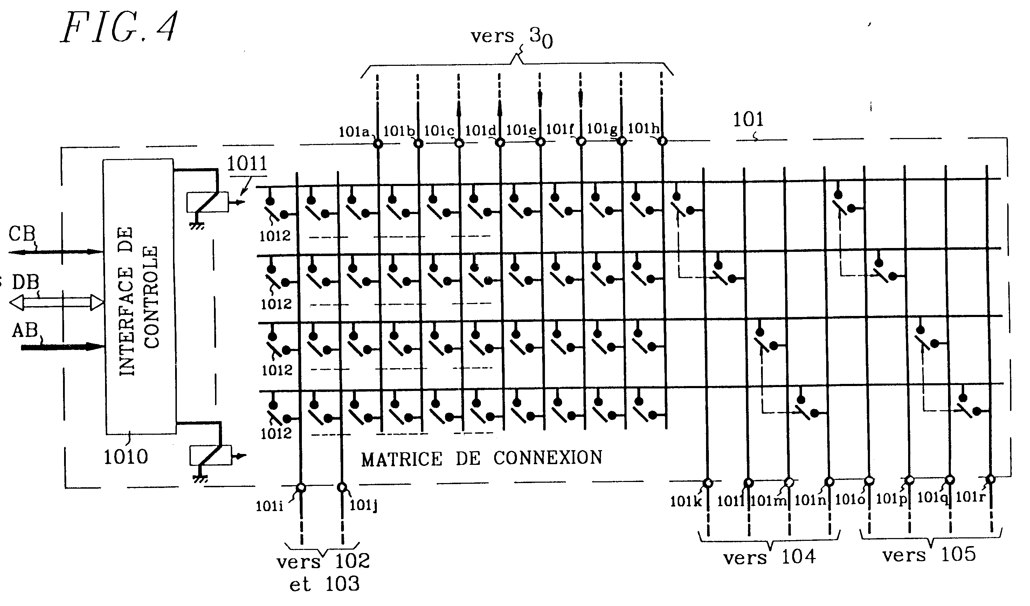

En référence à la Fig. 4, la matrice de connexion 101 comprend essentiellement un interface de contrôle 1010, et un ensemble de relais 1011 et de contacts associés 1012 pour établir des liaisons entre quatre premières lignes et dix-huit secondes lignes de la matrice de connexion 101.

L'interface 1010 est reliée à l'unité centrale 100 à travers les bus DB, AB et CB. Une pluralité de sorties de l'interface 1010 est reliée à des bobines des relais 1011 pour commander l'activation des contacts 1012 correspondants lorsqu'une connexion est à établir. La matrice 101 est conçue pour permettre toutes les combinaisons de connexion possibles entre les huit bornes 101a à 101h et les dix bornes 101i à 101r de la matrice.

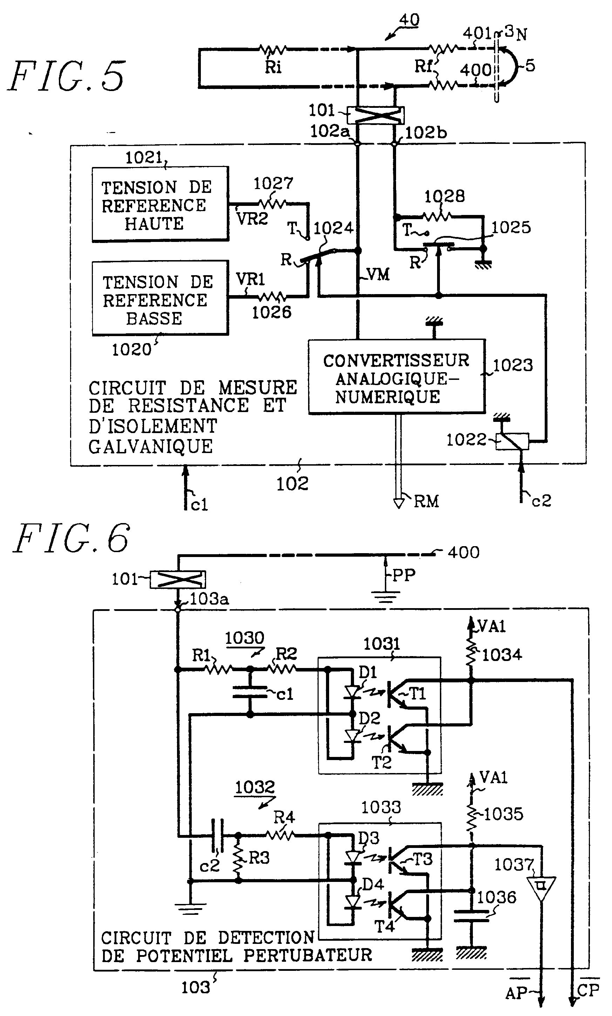

En référence à la Fig. 5, le circuit de mesure de résistance et d'isolement galvanique 102 comprend essentiellement une source de tension de référence basse 1020, une source de tension de référence haute 1021, un relais 1022, et un convertisseur analogique-numérique 1023.

La source de tension de référence basse 1020 délivre une tension de référence VR1 de l'ordre de 5V et est utilisée pour les mesures de continuité et résistance. Afin d'effectuer une mesure de continuité et résistance, le signal de commande C2 est positionné à l'état inactif "0" et le relais 1022 est consécutivement dans un état désactivé. Le relais 1022 étant désactivé, un interrupteur-inverseur 1024 et un contact 1025 commandés par le relais 1022 sont tous les deux dans un état de repos R. Une résistance 1026 relie alors, à travers l'interrupteur-inverseur 1024, une sortie de la source 1020 à une entrée du convertisseur 1023 et à la sortie de courant 102a du circuit 102, et l'entrée de courant 102b est reliée directement à une borne de masse à travers le contact 1025. Dans le cas d'une mesure de continuité et résistance par exemple de la paire 40, les sortie et entrée de courant 102a et 102b sont reliées à des premières extrémités de deux fils 400 et 401, et des secondes extrémités des fils 400 et 401 sont court-circuitées par exemple au niveau de la dernière prise 3_{N} du bus 4, à l'aide d'une prise-shunt 5. Une tension de mesure VM est présente en entrée du convertisseur 1023. Cette tension VM est échantillonnée et convertie en le mot numérique RM transmis à l'unité centrale 100. A partir du mot RM, l'unité 100, connaissant l'amplitude de la tension VR1 et la valeur de la résistance 1026, déduit une résistance moyenne Rf de chacun des fils 400 et 401.

La source de tension de référence haute 1021 délivre une tension de référence VR2 de l'ordre de 500 V et est utilisée pour les mesures d'isolement galvanique entre les fils du bus 4. Afin d'effectuer une mesure d'isolation galvanique, le signal de commande C2 est positionné à l'état actif "1" et le relais 1022 est dans un état activé. Le signal de commande C1 est également à l'état "1" et active la source 1021 pour la production de la tension VR2. Le relais 1022 étant activé, l'interrupteur-inverseur 1024 et le contact 1025 sont dans un état de travail T. Une résistance 1027 relie alors, à travers l'interrupteur-inverseur 1024, une sortie de la source 1021 à l'entrée du convertisseur 1023 et à la sortie de courant 102a, et l'entrée de courant 102b est reliée à la borne de masse à travers une résistance 1028. Dans le cas d'une mesure d'isolement galvanique par exemple entre les fils 400 et 401 de la paire 40, les premières extrémités de ces fils sont connectées aux sortie et entrée de courant 102a et 102b du circuit 102. La prise-shunt 5, représentée à la Fig. 5, est retirée. Les valeurs des résistances 1027 et 1028 et l'amplitude de la tension VM sont déterminées pour amener l'amplitude de la tension de mesure VM dans une dynamique de fonctionnement du convertisseur. La tension VM est convertie par le convertisseur 1023 en le mot numérique RM qui est transmis vers l'unité centrale 100. A partir du mot RM, l'unité centrale 100 déduit une résistance d'isolation galvanique Ri entre les fils 400 et 401 de la paire 40.

En référence à la Fig. 6, le circuit de détection de potentiel perturbateur 103 comprend essentiellement un filtre passe-bas 1030 et un premier opto-coupleur 1031, ainsi qu'un filtre passe-haut 1032 et un second opto-coupleur 1033.

L'entrée 103a du circuit 103 est reliée par exemple au fil 400 de la paire 40 afin de détecter un éventuel potentiel perturbateur PP entre ce fil et la terre.

Le filtre passe-bas 1030 est du type RC et est constitué de deux résistances R1 et R2 et d'un condensateur C1. Les résistances R1 et R2 sont reliées en série et sont placées entre l'entrée 103a du circuit 103 et une première entrée de l'opto-coupleur 1031. Le condensateur C1 est placé entre un point de connexion commun aux résistances R1 et R2 et une seconde entrée de l'opto-coupleur 1031 connectée à la terre.

L'opto-coupleur 1031 comprend deux diodes électro-luminescentes D1 et D2 et deux photo-transistors T1 et T2. Les deux diodes D1 et D2 sont montées en anti-parallèle et sont connectées entre les première et seconde entrées de l'opto-coupleur 1031. Les photo-transistors T1 et T2 sont de type bipolaire NPN et sont éclairés respectivement par les diodes D1 et D2. Ils sont connectés en parallèle et comprennent des émetteurs et collecteurs reliés respectivement à la masse du système et à une première extrémité d'une résistance 1034 dont une seconde extrémité est portée à une tension continue d'alimentation VA1. Le signal C̅P̅ est produit au niveau des collecteurs des transistors T1 et T2 et indique par un état "0" la présence d'un potentiel perturbateur continu PP, positif ou négatif, dans le fil du bus 4 en cours de test.

Le filtre passe-haut 1032 est du type RC et est constitué de deux résistances R3 et R4 et d'un condensateur C2. Le condensateur C2 comprend une première extrémité reliée à l'entrée 103b du circuit 103 et une seconde extrémité reliée à la terre et à une première entrée de l'opto-coupleur 1033 respectivement à travers les résistances R3 et R4.

L'opto-coupleur 1033 comprend deux diodes électro-luminescentes D3 et D4 et deux photo-transistors T3 et T4. De même que dans l'opto-coupleur 1031, les diodes D3 et D4 sont montées en anti-parallèle entre la première entrée et une seconde entrée de l'opto-coupleur reliée à la terre. Les photo-transistors T3 et T4 sont de type bipolaire NPN et sont éclairés respectivement par les diodes D3 et D4. Ils sont montés en parallèle et comprennent des émetteurs et collecteurs respectivement reliés à la masse et à une première extrémité d'une résistance 1035 dont une seconde extrémité est portée à la tension continue d'alimentation VA1. Le signal A̅P̅ est produit au niveau des collecteurs des transistors T3 et T4 et indique par un état "0" la présence d'un potentiel perturbateur alternatif PP dans le fil du bus 4 en cours de test. De plus, un condensateur 1036 et un amplificateur logique à hystérésis 1037 sont également prévus afin de filtrer et mettre en forme le signal A̅P̅ .

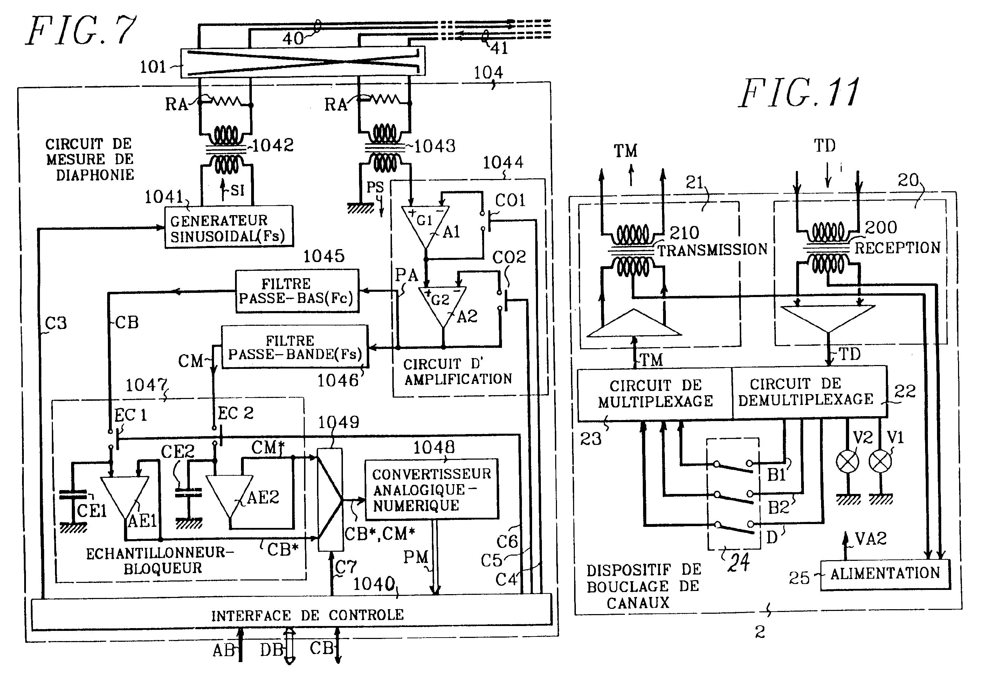

En référence à la Fig. 7, le circuit de mesure de diaphonie 104 comprend essentiellement une interface de contrôle 1040, un générateur sinusoïdal 1041, des transformateurs de ligne 1042 et 1043, un circuit d'amplification 1044, des filtres 1045 et 1046, un échantillonneur-bloqueur 1047, et un convertisseur analogique-numérique 1048.

L'interface 1040 est reliée à l'unité centrale 100 à travers les bus DB, AB et CB. L'interface 1040 délivre plusieurs signaux de commande C3 à C7 et reçoit du convertisseur analogique-numérique 1048 des mots numériques PM à transmettre à l'unité centrale 100.

Le générateur sinusoïdal 1041 est mis en fonctionnement par le signal C3 en réponse à une commande transmise par l'unité centrale 100. Le générateur sinusoïdal 1041 produit un signal sinusoïdal SI de fréquence Fs typiquement égale à 100 kHz. Le signal SI est injecté à travers le transformateur de ligne 1042, la matrice 101 et la prise 3₀, par exemple dans la paire 40 du bus 4. Dans le cas où il est recherché un taux de diaphonie de la paire 40 vers la paire 41, la paire 41 est reliée au transformateur de ligne 1043 et un signal de mesure PS délivré en sortie par le transformateur 1043 est appliqué en entrée du circuit d'amplification 1044.

De préférence, comme montré à la Fig. 7, les transformateurs 1042 et 1043 sont adaptés aux paires symétriques à l'aide de résistances d'adaptation de ligne RA placées entre les fils de paire et typiquement égales à 100 Ω.

Le circuit d'amplification 1044 est constitué de deux amplificateurs en cascade A1 et A2 auxquels correspondent respectivement des gains d'amplification G1 et G2.

Une entrée directe + de l'amplificateur A1 reçoit le signal PS délivré par le transformateur 1043. Une entrée inverse - et une sortie de l'amplificateur A1 sont bouclées à travers un commutateur CO1 représenté schématiquement sous la forme d'un contact. Le commutateur CO1 est commandé par le signal de commande C4 fourni par l'interface 1040. Lorsque le signal C4 est à l'état "0", le commutateur CO1 est ouvert, et le signal PS est amplifié avec le gain G1. Lorsque le signal C4 est à l'état "1", le commutateur CO1 est fermé, et l'amplificateur A1 est configuré en amplificateur-suiveur de gain égal à 1.

L'amplificateur A2 est câblé de manière analogue à l'amplificateur A1. Il reçoit le signal G1.PS ou PS, à travers l'amplificateur A1, à une entrée directe +. Une entrée inverse - et une sortie de l'amplificateur A2 sont bouclées à travers un commutateur CO2 analogue au commutateur CO1. Le commutateur CO2 est commandé par le signal de commande C5 fourni par l'interface 1040.

Le circuit d'amplification 1044 délivre en sortie, selon les états des signaux C4 et C5, le signal de mesure amplifié PA égal au signal PS, G1.PS, G2.PS, ou G1.G2.PS. Le circuit d'amplification est commandé en contre-réaction par l'unité centrale 100 de manière à cadrer le niveau du signal de mesure PA dans une dynamique de fonctionnement du convertisseur analogique-numérique 1048 afin que l'unité 100 reçoive un mot de mesure PM significatif.

Les filtres 1045 et 1046 reçoivent en entrée le signal de mesure amplifié PA et ont pour fonction respectivement de récupérer dans le signal PA une composante de fréquence basse CB et une composante CM à la fréquence de mesure Fs=100 kHz. Le filtre 1045 est du type passe-bas et a une fréquence de coupure basse Fc de l'ordre de 200 Hz. Le filtre 1046 est du type passe-bande et a une fréquence centrale égale à la fréquence de mesure Fs=100 kHz. Les composantes CB et CM du signal PA sont fournies à l'échantillonneur-bloqueur 1047.

L'échantillonneur-bloqueur 1047 est un circuit à deux voies parallèles. Il est représenté schématiquement et comprend de manière classique deux commutateurs d'échantillonnage EC1 et EC2 associés à deux condensateurs CE1 et CE2 et à deux amplificateurs-suiveurs AE1 et AE2. L'échantillonnage des composantes CB et CM est contrôlé par l'interface 1040 à l'aide du signal de commande C6. L'échantillonneur-bloqueur 1047 délivre en sortie des échantillons CB* et CM* correspondant respectivement aux composantes CB et CM.

Les échantillons CB* et CM* sont appliqués respectivement à des première et seconde entrées d'un multiplexeur 1049 qui est contrôlé par le signal de commande C7 fourni par l'interface 1040. Les échantillons CB* et CM* sont multiplexés et fournis en entrée au convertisseur analogique-numérique 1048. Le convertisseur 1048 délivre en réponse des mots numériques PM représentatifs des amplitudes des échantillons multiplexés CB* et CM*. Les mots PM sont transmis à l'unité centrale 100, et celle-ci les utilise pour déterminer le taux de diaphonie recherché et pour détecter, à partir des mots PM correspondant aux échantillons CB*, la présence éventuelle d'un bruit à basse fréquence dit de "ronflette" dans la paire 41 en cours de test.

Le système selon l'invention autorise de multiples possibilités de fonctionnement automatisé et une grande souplesse d'utilisation. L'opérateur commande l'exécution des tests de contrôle et des mesures au pas à pas ou de manière chaînée les uns derrière les autres. Ainsi par exemple, un test complet de continuité, de mesure de résistance, et d'isolement galvanique du bus 4 peut être lancé par l'opérateur. L'unité centrale 100 positionne le circuit 102 en mesure de résistance puis en mesure d'isolement galvanique et la matrice 101 est commandée de manière à sélectionner et à connecter successivement au circuit 102 tous les paires et fils du bus 4. Les résultats des tests de contrôle et des mesures sont visualisés sous la forme de tableaux et l'unité centrale 100 détecte et indique à l'opérateur d'éventuelles anomalies telles que des résistances trop élevées, des défauts d'appairage... etc. De même, l'unité centrale 100 est capable de sélectionner et de connecter successivement aux circuits 103 et 104 tous les paires et fils du bus 4 afin de détecter les éventuels potentiels perturbateurs et de mesurer les taux de diaphonie entre paires ainsi que les bruits de "ronflette".

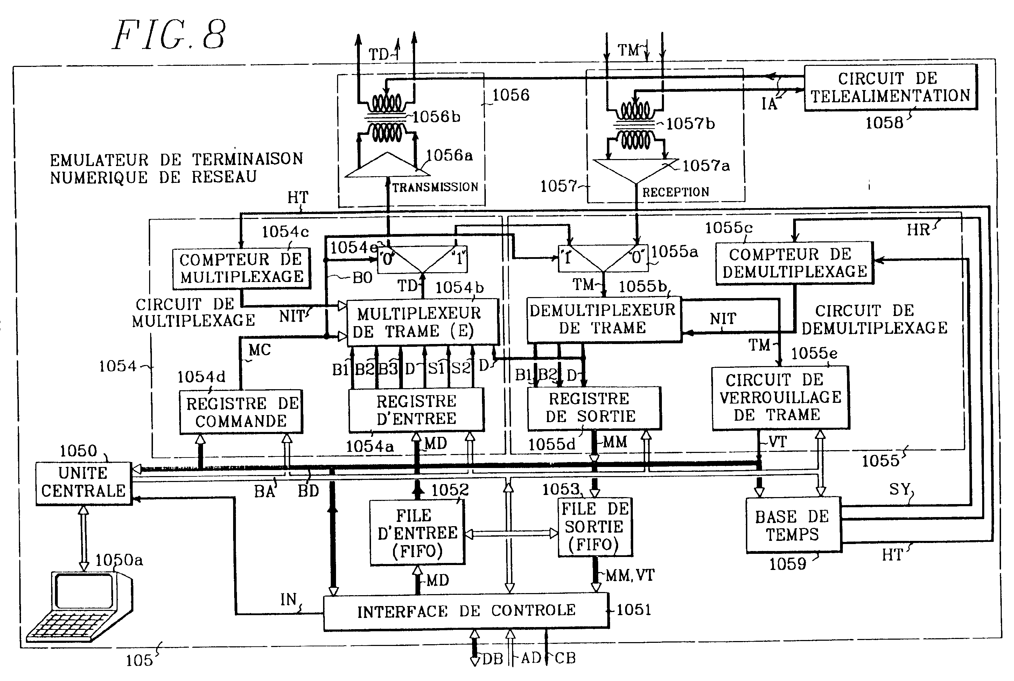

En référence aux Figs. 8 à 10B, il est maintenant décrit l'émulateur de terminaison numérique de réseau 105.

L'émulateur 105 comprend essentiellement une unité centrale 1050, une interface de contrôle 1051, une file d'entrée 1052 et une file de sortie 1053, un circuit de multiplexage 1054, un circuit de démultiplexage 1055, des circuits de transmission et de réception de ligne 1056 et 1057, un circuit de téléalimentation 1058, et une base de temps 1056.

L'unité centrale 1050 est constituée autour d'un microprocesseur de 8 bits. Elle est programmée pour gérer l'émulateur 105 selon deux modes de fonctionnement, un mode de fonctionnement en autonome et un mode de fonctionnement sous contrôle extérieur, notamment sous contrôle de l'unité centrale 100 du système.

Pour le bus 4, l'émulateur 105 est équivalent à une terminaison numérique de réseau NT (Fig. 1) et présente une compatibilité du type interface normalisée T.

A travers le circuit de transmission de ligne 1056, l'émulateur 105 transmet des trames descendantes de test TD de structure 2B+D telle que montrée à la Fig. 2. Les trames descendantes TD sont produites par l'émulateur 105 en fonction d'informations contenues dans des mots descendants de test MD et relatives aux valeurs d'octets et bits à introduire dans les intervalles temporels correspondants des canaux B1, B2, D et S1, S2. Selon le mode de fonctionnement de l'émulateur 105, les mots MD sont lus dans des tables internes mémorisées par l'unité centrale 1050 ou transmises à travers l'interface de contrôle 1051 par l'unité centrale 100 du système.

A travers le circuit de réception de ligne 1057, l'émulateur 105 reçoit des trames montantes de test TM également de structure 2B+D telle que montrée à la Fig. 2. Les trames montantes TM sont démultiplexées dans l'émulateur 105 et les informations récupérées dans les canaux B1, B2 et D sont incluses dans les mots montants de test MM qui selon le mode de fonctionnement de l'émulateur 105 sont mémorisés dans d'autres tables internes de l'unité centrale 1050 ou transmis à travers l'interface de contrôle 1051 vers l'unité centrale 100 du système.

Afin de pouvoir garantir qu'un bus de transmission tel que le bus 4 aura un fonctionnement dynamique correct, il est nécessaire de s'assurer préalablement d'une part que le verrouillage de trame et la réception des trames s'effectuent dans de bonnes conditions aux différentes extrémités du bus et notamment aux extrémités les plus éloignées, et d'autre part que les taux d'erreurs de transmission restent compris dans des fourchettes prédéterminées. Pour réaliser ces contrôles, des communications sont établies à travers le bus entre l'émulateur 105 et des terminaux et/ou des dispositifs de simulation de terminal, tels que les dispositifs de bouclage de canaux 2₀ et 2₁ montrés à la Fig. 1 et décrits ci-après en référence à la Fig. 11. De préférence, les terminaux et/ou dispositifs 2₀ et 2₁ fonctionnent en écho et transmettent en réponse à la réception des trames descendantes de test TD, des trames montantes de test TM contenant les mêmes informations que les trames TD dans l'un, deux, ou les trois canaux B1, B2 et D. Les mots descendants et montants de test MD et MM sont comparés par l'unité centrale 1050 de l'émulateur ou l'unité centrale 100 du système, selon le mode de fonctionnement, afin de détecter les erreurs de transmission et de calculer les taux d'erreurs de transmission sur des périodes de temps prédéterminées par exemple de l'ordre de 24 heures.

Lorsque l'émulateur 105 est utilisé selon le mode de fonctionnement en autonome, il lui est associé une console de dialogue 1050a et éventuellement une imprimante (non représentée), et il fonctionne indépendamment de tout système extérieur tel que le système de contrôle et mesure de bus selon l'invention. L'émulateur 105 est contrôlé au moyen de la console 1050a reliée à l'unité centrale 1050. Selon ce mode de fonctionnement, l'interface 1051 et les files 1052 et 1053 sont inactives et l'unité 1050 gère le fonctionnement des éléments 1054 à 1059 de l'émulateur 105 à travers des bus d'adresses BA et de données BD, traitent les mots MD et MM pour déduire les taux d'erreurs de transmission, et commandent la visualisation des résultats sur la console 1050a et éventuellement leur impression.

Lorsque l'émulateur est utilisé selon le mode de fonctionnement sous contrôle extérieur, l'unité centrale 1050 gère les transmissions des mots MD et MM respectivement entre la file d'entrée 1052 et le circuit de multiplexage 1054, et entre le circuit de démultiplexage 1055 et la file de sortie 1053. Les éléments 1054 à 1059 de l'émulateur sont contrôlés par l'unité centrale 100 du système à travers l'interface 1051 et les bus BA et BD. L'unité centrale 1050 de l'émulateur est prioritaire pour l'accès aux bus BA et BD. L'unité 1050 libère périodiquement les bus BA et BD afin de permettre à l'unité centrale 100 du système de gérer les éléments 1054 à 1059 de l'émulateur. Afin d'informer l'unité centrale 100 du système de la disponibilité des bus BA et BD, l'unité 1050 adresse l'interface de contrôle 1051 et positionne un bit déterminé dans un registre d'état qui est inclus dans l'interface 1051 et est scruté périodiquement par l'unité centrale 100 du système.

L'interface de contrôle 1051 est un circuit bidirectionnel adressable par l'unité centrale 1050 de L'émulateur et l'unité centrale 100 du système. Du côté système, l'interface 1051 est reliée aux bus DB, AD et CB. Du côté émulateur, elle comprend des premier et second ports d'entrée/sortie directement reliés respectivement au bus de données BD et au bus d'adresses BA, et des ports de sortie et d'entrée reliés au bus de données BD à travers respectivement les files d'entrée et de sortie 1052 et 1053. Sur instruction de l'unité centrale 100 du système, l'interface 1051 commande l'initialisation de l'unité centrale 1050 de l'émulateur au moyen d'un signal IN. Le signal d'initialisation IN est activé consécutivement à une sélection et mise en fonctionnement effectuée par l'unité centrale 100 du système et à la suite de défaut de fonctionnement.

Les files 1052 et 1053 sont du type FIFO. La file 1052 mémorise temporairement les mots descendants MD transmis de l'interface 1051 vers le circuit de multiplexage 1054. Elle est contrôlée en écriture et lecture à travers le bus BA respectivement par l'interface 1051 et l'unité centrale 1050.

La file 1053 mémorise temporairement les mots montants MM transmis du circuit de démultiplexage 1055 vers l'interface 1051. En parallèle avec les mots MM, un bit d'indication de verrouillage de trame VT fourni par le circuit de démultiplexage 1055 est également transmis vers l'unité centrale 100 du système via la file 1053 et l'interface 1051. La file 1053 est contrôlée en écriture et lecture à travers le bus BA respectivement par l'unité centrale 1050 et l'interface 1051.

Le circuit de multiplexage 1054 comprend un registre d'entrée 1054a, un multiplexeur de trame 1054b, un compteur de multiplexage 1054c, un registre de commande 1054d, et un démultiplexeur d'aiguillage 1054e.

Le registre 1054a charge, sous la commande de l'unité centrale 1050, les mots descendants MD convoyés par le bus BD. En sortie, le registre 1054a délivre les octets et bits des canaux B1, B2, D, S1 et S2 contenus dans des champs correspondants des mots MD. Les octets et bits des canaux B1, B2, D, S1 et S2 sont appliqués à des entrées correspondantes du multiplexeur de trame 1054b.

Le multiplexeur de trame 1054b est un circuit connu. Outre les octets et bits des canaux B1, B2, D, S1 et S2 délivrés par le registre 1054a, il reçoit également à des entrées de canal d'écho E des bits de canal D délivrés par le circuit de démultiplexage 1055 et extraits des trames montantes TM. Le multiplexeur de trame 1054b est commandé par le compteur de multiplexage 1054c qui est un compteur modulo 48 délivrant des numéros d'intervalle temporel de trame NIT=0 à NIT=48 au rythme d'une horloge de transmission de bit HT fournie par la base de temps 1059. En sortie, le multiplexeur de trame 1054b délivre les trames descendantes TD contenant les octets et bits des canaux B1, B2, D, E, S1 et S2 ainsi que les bits d'alignement et verrouillage de trame F et F_{A}, de téléactivation A, et d'équilibrage L et N (Fig. 2).

Le registre de commande 1054d a pour fonction de mémoriser un mot de commande MC transmis par l'unité centrale 1050 ou l'interface 1051 et destiné à sélectionner des modes de fonctionnement particuliers du multiplexeur de trame 1054b. Le mot de commande MC permet notamment de commander la mise en sommeil des trames descendantes, la production de trames descendantes ayant tous les bits d'information à zéro, par exemple lors de l'établissement des liaisons avec les terminaux, et la suppression des bits d'alignement et verrouillage de trame par exemple à des fins de test.

Le démultiplexeur d'aiguillage 1054e reçoit les trames descendantes TD à une entrée reliée au multiplexeur de trame 1054b. Une première sortie du démultiplexeur 1054e est reliée au circuit de transmission de ligne 1056. Une seconde sortie du démultiplexeur 1054e est reliée au circuit de démultiplexage 1055. Le démultiplexeur 1054e est commandé par un bit BO du mot de commande MC. Le bit BO aux états "0" et "1" commande la transmission des trames descendantes TD respectivement vers le circuit de transmission de ligne 1056 et vers le circuit de démultiplexage 1055. Le bit BO est un bit de commande de bouclage qui est également fourni au circuit de démultiplexage 1055 afin de commander un multiplexeur d'aiguillage 1055a de manière correspondante. Lorsque le bit BO est à l'état "1", les trames descendantes TD délivrées par le multiplexeur de trame 1054b sont injectés en entrée du circuit de démultiplexage 1055 à la place des trames montantes TM transmises par le circuit de réception de ligne 1057. L'émulateur est alors bouclé sur lui-même. Ce mode de fonctionnement est commandé par l'unité centrale 1050 ou l'interface 1051 afin de tester l'émulateur préalablement à sa mise en opération ou lorsqu'un doute existe sur son bon fonctionnement.

Outre le multiplexeur d'aiguillage 1055a, le circuit de démultiplexage 1055 comprend un démultiplexeur de trame 1055b, un compteur de démultiplexage 1055c, un registre de sortie 1055d, et un circuit de verrouillage de trame 1055e.

Le multiplexeur d'aiguillage 1055a est commandé par le bit de commande de bouclage BO et il comprend des première et seconde entrées reliées respectivement à une sortie du circuit de réception de ligne 1057 et à la seconde sortie du démultiplexeur d'aiguillage 1054e. Une sortie du multiplexeur 1055a et reliée au démultiplexeur de trame 1055b et transmet les trames montantes TM.

Le démultiplexeur de trame 1055b est un circuit connu, complémentaire au multiplexeur de trame 1054b. Le démultiplexeur 1055b est commandé par le compteur de démultiplexage 1055c qui est un compteur modulo 48 délivrant des numéros d'intervalle temporel de trame NIT=0 à NIT=48 au rythme d'une horloge de réception de bit HR fournie par la base de temps 1059. Le démultiplexeur 1055b délivre en sortie, sous forme parallèle, les octets et bits des canaux B1, B2 et D contenus dans les trames montantes TM reçues. Les octets et bits des canaux B1, B2 et D sont chargés dans le registre de sortie 1055d afin d'être transmis dans le bus de données BD sous la forme des mots montants MM.

Le circuit de verrouillage de trame 1055e est un circuit connu. Le circuit 1055e reçoit en entrée, sous forme série, les bits des trames montantes TM délivrés par le démultiplexeur de trame 1055b en code binaire. Classiquement, le circuit 1055 détecte les bits d'alignement et verrouillage de trame F et F_{A} afin de produire un bit d'indication de verrouillage de trame VT qui est activé consécutivement à plusieurs détections correctes successives desdits bits F et F_{A}. Le bit VT est transmis dans le bus BD et informe l'unité 100 ou 1050, suivant le cas de fonctionnement, de la synchronisation ou de la non-synchronisation à la réception des trames. Le bit VT est également fourni à la base de temps 1059 qui l'utilise afin de produire un signal de synchronisation SY pour l'initialisation du compteur de démultiplexage 1055c.

Les circuits de transmission et de réception de ligne 1056 et 1057 sont des circuits complémentaires. Ils comprennent des amplificateurs de transmission et de réception 1056a et 1057a associés à des transformateurs de ligne 1056b et 1057b. Les transformateurs de ligne 1056b et 1057b sont du type à point milieu et ont des enroulements secondaire et primaire reliés aux bornes 101o, 101p et 101q, 101r de la matrice de connexion 101, respectivement.

Le circuit de téléalimentation 1058 délivre un courant de téléalimentation IA. Le courant IA est injecté "en fantôme" dans les paires du bus à travers les transformateurs 1056b et 1057b. Le courant IA est destiné à alimenter les terminaux et dispositifs de bouclage de canaux 2₀ et 2₁ connectés au bus.

La base de temps 1059 est conçue pour autoriser une vérification complète de la synchronisation à la réception des trames. Sous la commande de l'unité centrale 100 ou 1050, l'horloge de réception de bit HR peut être retardée par rapport à l'horloge de transmission de bit HT d'une ou plusieurs fractions d'intervalle temporel de bit. Différentes valeurs de décalage sont successivement commandées et l'état du bit d'indication de verrouillage de trame VT est lu par l'unité centrale 100 ou 1050. Un décalage optimum entre les horloges HT et HR est déterminé à partir de taux d'erreurs de transmission. L'unité centrale 100 ou 1050 déduit ensuite, à partir du décalage optimum, une estimation du temps de propagation ϑ (Fig. 2) dans le bus 4, et corrélativement la longueur du bus qui doit être comprise dans une fourchette déterminée dépendant de la configuration de distribution du bus.

La base de temps 1059 comprend des moyens pour produire différents signaux d'horloge retardés deux à deux d'une fraction unité d'intervalle temporel de bit. Un seul parmi ces signaux d'horloge retardés est sélectionné par l'unité centrale 100 ou 1050 et est fourni comme horloge de réception de bit HR au circuit de démultiplexage 1055. Des moyens sont également prévus afin d'insérer sous la commande de l'unité centrale 100 ou 1050 une ou plusieurs impulsions supplémentaires entre des impulsions successives de l'horloge HR afin de décaler la réception des trames montantes TM d'un ou plusieurs intervalles temporels de bit.

En référence à la Fig. 9, la base de temps 1059 comprend essentiellement une interface 1059a, un oscillateur local 1059b, un registre à décalage 1059c, un multiplexeur d'aiguillage 1059d, et un circuit d'insertion d'impulsion 1059e.

L'interface 1059a est sélectionnée à travers le bus d'adresse BA et reçoit, à travers le bus de données BD, des mots de commande et le bit d'indication de verrouillage de trame VT. L'interface 1059a fournit en sortie un mot de sélection d'horloge SH et un signal de commande d'insertion d'impulsion II en réponse à des mots de commande correspondants reçus par l'interface 1059a. Le bit VT est également délivré en sortie par l'interface 1059a.

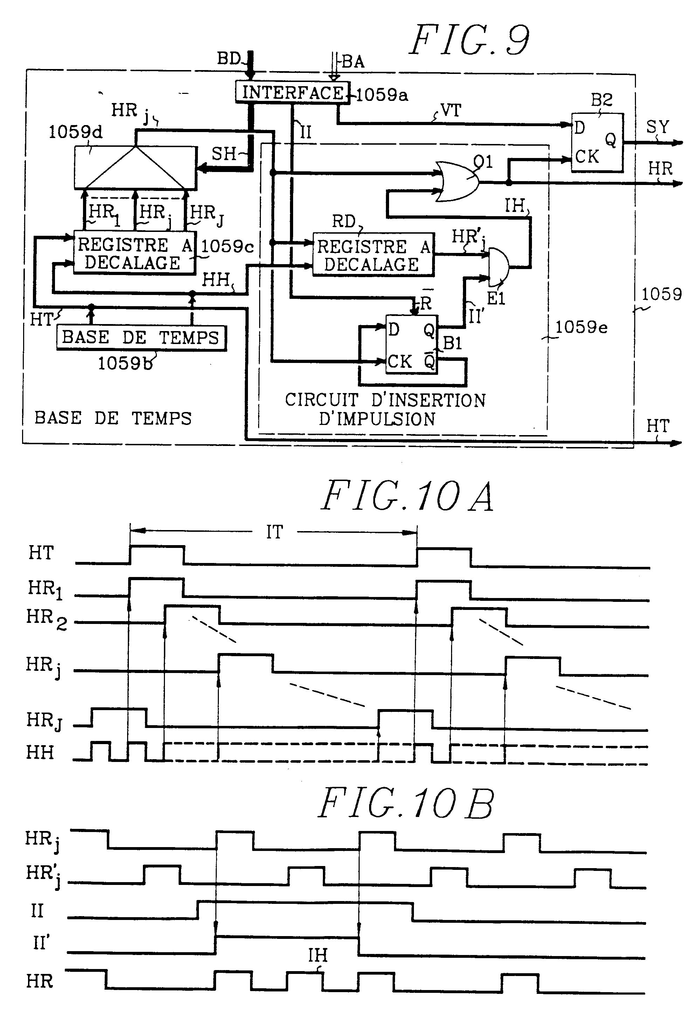

L'oscillateur local 1059b et le registre à décalage 1059c ont pour fonction de produire une pluralité de J signaux d'horloge de réception HR₁ à HR_{J} décalés deux à deux d'une fraction d'intervalle temporel de bit de durée égale à t/J, où t est la durée d'un intervalle temporel de bit. Des formes d'onde des signaux HR₁ à HR_{J} sont montrées à la Fig. 10A ainsi que celles de l'horloge de transmission de bit HT et d'un signal d'horloge à fréquence rapide HH.

Les signaux HT et HH sont produits par l'oscillateur 1059b. Le signal HH a une fréquence égale à J/t, fréquence qui est multiple de celle de l'horloge HT. Les signaux HT et HH sont appliqués respectivement à une entrée de données et à une entrée d'horloge du registre à déclage 1059c. Les signaux HR₁ à HR_{J} sont fournis par des sorties parallèles de données du registre 1059c et sont appliqués à des entrées correspondantes du multiplexeur d'aiguillage 1059d. Le multiplexeur 1059d reçoit à des entrées de commande le mot de sélection d'horloge SH. En sortie, le multiplexeur 1059d délivre un signal d'horloge HRⱼ sélectionné par le mot SH parmi les signaux HR₁ à HR_{J}. Le signal d'horloge HR est fourni au circuit d'insertion d'impulsion 1059e.

Le circuit d'insertion d'impulsion 1059e comprend un registre à déclage RD, une bascule B1 de type D, une porte logique ET à deux entrées E1, et une porte logique OU à deux entrées O1.

Le registre à décalage RD a pour fonction de produire un signal d'horloge retardé HR′ⱼ à partir du signal d'horloge HRⱼ. Le signal HR′ⱼ est retardé approximativement d'une demi-période. Le registre RD reçoit le signal d'horloge HRⱼ et le signal HH respectivement à des entrées de données et d'horloge et délivre en sortie le signal retardé HR′ⱼ. Le signal HR′ⱼ est appliqué à une première entrée de la porte E1.

La bascule B1 a pour fonction de synchroniser le signal de commande d'insertion d'impulsion II avec les signaux HRⱼ et HR′ⱼ, ainsi que de calibrer à une période d'horloge la durée dudit signal de commande II. La bascule B1 reçoit les signaux HRⱼ et II respectivement à une entrée d'horloge CK et à une entrée synchrone de remise à zéro R̅. Une sortie complémentaire Q̅ est bouclée sur une entrée de données D de la bascule B1. La bascule B1 délivre un signal de commande d'insertion d'impulsion II′, synchronisé et calibré, à travers une sortie Q. Le signal II′ est appliqué à une seconde entrée de la porte E1.

Lorsque le signal de commande II′ est à l'état actif "1", la porte E1 est ouverte et laisse passer une impulsion d'horloge IH. Des formes d'onde des signaux HRⱼ, HR′ⱼ, II, II′, et HR ainsi que l'impulsion IH sont montrées à la Fig. 10B. L'impulsion IH s'insère entre deux impulsions successives du signal d'horloge HRⱼ afin de produire l'horloge HR.

Une bascule de type D, B2, est également prévue dans la base de temps 1059. La bascule B2 produit le signal de synchronisation SY à partir du bit d'indication de verrouillage de trame VT qui est appliqué à une entrée de donnée D. Le signal SY est représentatif de l'état du bit VT et est synchronisé par l'horloge HR qui est appliquée à une entrée d'horloge CK. Le signal SY est délivré par une sortie Q de la bascule B2 et commande l'initialisation du compteur de démultiplexage 1055c de manière à synchroniser son comptage sur la réception des bits de trame.

En référence à la Fig. 11, le dispositif de bouclage de canaux 2₁, par exemple, est maintenant décrit. Le dispositif 2₁ comprend essentiellement des circuits de réception et de transmission de ligne 20 et 21 analogues aux circuits 1056 et 1057 inclus dans l'émulateur 105 (Fig. 8), un circuit de démultiplexage 22, un circuit de multiplexage 23, des interrupteurs de bouclage 24, et un circuit d'alimentation 25.

Les trames descendantes TD sont fournies au circuit de démultiplexage 22 à travers le circuit de réception de ligne 20. Les bits et octets des canaux B1, B2 et D inclus dans les trames TD sont délivrés en parallèle par le circuit 22. Les interrupteurs 24 sont positionnés par l'opérateur afin de boucler sur des entrées correspondantes du circuit de multiplexage 23 l'un ou plusieurs des canaux B1, B2 et D.

Le circuit d'alimentation 25 est relié aux transformateurs de ligne 200 et 210 et reçoit un courant de téléalimentation. Une tension d'alimentation VA2 est délivrée par le circuit 25 et alimente les différents éléments du dispositif 2₁.

Comme montré à la Fig. 1, le dispositif de bouclage de canaux 2₀ est de préférence connecté à la prise 3_{N} placée en bout du bus 4, et le dispositif 2₁ est déplacé par l'opérateur de prise en prise afin de vérifier qu'il est possible d'établir des liaisons avec l'émulateur 105 à partir de chacune des prises du bus 4. Afin que l'opérateur puisse vérifier aisément que les liaisons avec l'émulateur 105 sont bien établies, un voyant V1 commandé par le circuit de démultiplexage 22 est prévu dans les dispositifs de bouclage de canaux 2₀ et 2₁. Le voyant V1 visualise l'état d'un bit d'indication de verrouillage de trame VTa produit dans le circuit 22 consécutivement à la réception des trames TD. Des informations complémentaires peuvent être transmises de l'émulateur 105 vers les dispositifs 2₀ et 2₁ à travers l'un des canaux de réserve S1 et S2.

## Revendications

1. Emulateur de terminaison numérique de réseau de télécommunications pour transmettre et recevoir des trames numériques de test (TD, TM) afin notamment de contrôler et mesurer des caractéristiques d'un bus (4) de régie d'abonné, caractérisé en ce qu'il comprend
des moyens (1054) pour multiplexer des premiers mots numériques de test (MD) en des trames descendantes de test (TD),
des moyens de transmission de ligne (1056) reliés au bus (4) pour y transmettre les trames descendantes (TD) vers des dispositifs terminaux de bouclage fonctionnant en écho (2₀, 2₁), connectés au bus (4),
des moyens de réception de ligne (1057) reliés au bus (4) pour recevoir des trames montantes de test (TM) transmises par les dispositifs terminaux (2₀, 2₁) en réponse à la réception des trames descendantes (TD),
des moyens (1055) pour démultiplexer les trames montantes (TM) en des seconds mots numériques de test (MM),
une base de temps (1059) pour produire des horloges de transmission (HT) et de réception (HR) destinées respectivement aux moyens pour multiplexer (1054) et pour démultiplexer (1055),
des moyens internes de contrôle (1050, 1050a) reliés aux moyens pour multiplexer (1054) et pour démultiplexer (1055), et à la base de temps (1059) pour contrôler le fonctionnement de ces éléments en fonction de commandes délivrées par un opérateur (1050a), et
des moyens internes de traitement (1050) délivrant les premiers mots (MD) et recevant les seconds mots (MM) pour traiter les seconds mots en fonction des premiers mots afin de détecter des liaisons de télécommunications défectueuses entre l'émulateur (105) et les dispositifs terminaux (2₀, 2₁) et de déduire les caractéristiques recherchées du bus (4).

2. Emulateur conforme à la revendication 1, caractérisé en ce que la base de temps (1059) comprend des moyens (1059b à 1059d) commandés par les moyens de contrôle (1050) pour produire une pluralité (J) de signaux d'horloge (HR₁ à HRⱼ) décalés deux à deux d'une fraction d'intervalle temporel de bit de durée prédéterminée (t/J) et pour sélectionner les horloges de transmission (HT) et de réception (HR) parmi lesdits signaux d'horloge, et des moyens (1059e) commandés par les moyens de contrôle (1050) pour insérer dans l'horloge de réception (HR) au moins une impulsion d'horloge supplémentaire (IH) afin de décaler le démultiplexage des trames montantes (TM) d'au moins une desdites fractions d'intervalle temporel de bit, lesdits moyens pour produire et pour insérer (1059b à 1059d, 1059e) étant commandés par les moyens de contrôle (1050) de manière à décaler progressivement l'horloge de réception (HR) par rapport à l'horloge de transmission (HT) et à insérer des impulsions d'horloge supplémentaires (IH) jusqu'à une réception optimale des trames montantes (TM).

3. Emulateur conforme à la revendication 1 ou 2, caractérisé en ce qu'il comprend des moyens (1051 à 1053) reliés aux moyens pour multiplexer (1054) et pour démultiplexer (1055), à la base de temps (1059), et aux moyens de contrôle (1050), pour connecter l'émulateur (105) à des moyens extérieurs de contrôle et de traitement (100), lesdits moyens (1051 à 1053) étant destinés à fournir les premiers mots (MD) auxdits moyens extérieurs et à recevoir les seconds mots (MM) en provenance de ces moyens.

4. Emulateur conforme à l'une quelconque des revendications 1 à 3, caractérisé en ce qu'il comprend des moyens (1054e, 1055a) pour appliquer directement les trames descendantes (TD) en entrée des moyens pour démultiplexer (1055) afin de permettre aux moyens de contrôle (1050, 100) de tester le fonctionnement de différents éléments de l'émulateur (105).

5. Emulateur conforme à l'une quelconque des revendications 1 à 4, caractérisé en ce qu'il comprend des moyens de dialogue homme-machine (1050a) associés aux moyens de contrôle.

6. Emulateur conforme à l'une quelconque des revendications 1 à 5, caractérisé en ce qu'il comprend des moyens (1058, 1056b, 1057b) pour transmettre à travers le bus (4) un courant de téléalimentation (IA) destiné aux dispositifs terminaux (2₀, 2₁).

7. Système pour contrôler et mesurer des caractéristiques d'un bus de régie d'abonné, ledit bus (4) comprenant une pluralité de prises de connexion (3₀ à 3_{N}) destinées à relier le bus (4) à une terminaison numérique (NT) d'un réseau de télécommunications et à une pluralité de terminaux, caractérisé en ce que ledit système comprend un équipement principal (1) relié au bus (4) de préférence en lieu et place de la terminaison numérique de réseau (NT) et incluant un émulateur (105) conforme à l'une quelconque des revendications 1 à 6, et au moins un dispositif de simulation de terminal (2₀, 2₁) connecté au bus (4) pour simuler l'activité d'un terminal lorsque l'émulateur (105) du système est actif et transmettre des trames montantes de test (TM) en réponse aux trames descendantes de test (TD) transmises par l'émulateur (105) et ledit système comprenant des moyens de traitement (100) programmés pour calculer des taux d'erreur de transmission pour chacune des liaisons de télécommunications à partir des premier et second mots (MD, MM) transmis et reçus pendant une période de temps prédéterminée.

8. Système conforme à la revendication 7, caractérisé en ce que l'équipement principal (1) comprend, outre l'émulateur (105),
des premiers moyens (102) pour mesurer dans le bus (4) des valeurs de résistance et d'isolement galvanique,
des seconds moyens (104) pour mesurer des taux de diaphonie entre des paires de transmission du bus (4), et
des moyens (103) pour détecter dans le bus (4) la présence de potentiels perturbateurs continus et/ou alternatifs.

9. Système conforme à la revendication 8, en ce que l'équipement principal (1) comprend également
une matrice de connexion (101) ayant des premiers accès (101a à 101h) reliés au bus (4) et des seconds accès (101i à 101r) reliés aux premiers et seconds moyens pour mesurer (102, 104), aux moyens pour détecter (103), et à l'émulateur (105), et
des moyens (100) pour contrôler le fonctionnement de chacun des éléments (101 à 105) de l'équipement principal (1) et traiter des informations délivrées par lesdits éléments (102 à 105).

10. Système conforme à la revendication 9, caractérisé en ce que les moyens pour contrôler et traiter (100) comprennent des moyens de dialogue homme-machine (11, 13) de préférence sous la forme d'un terminal vidéotexte de type Minitel (11) auquel est éventuellement associée une imprimante (13).

11. Système conforme à l'une quelconque des revendications 7 à 10, caractérisé en ce qu'un dispositif de simulation de terminal (2₀, 2₁) comprend des moyens pour démultiplexer (22) des mots et bits (B1, B2, D) de canaux de télécommunications portés par les trames descendantes (TD), sélectionner lesdits mots et bits (B1, B2, D) et les multiplexer dans des trames montantes (TM) afin de transmettre en écho vers l'émulateur (105) les canaux correspondant aux mots et bits (B1, B2, D) sélectionnés.

12. Système conforme à la revendication 11, caractérisé en ce qu'un dispositif de simulation de terminal (2₀, 2₁) comprend également des moyens (22) pour détecter dans les trames descendantes (TD) des informations de service (VT) transmises par l'émulateur (105) et indiquant que la réception des trames montantes (TM) est correcte au niveau de l'émulateur (105), et des moyens (V1) pour visualiser des informations de service (VTa) transmises au dispositif (2₀, 2₁).

13. Système conforme à la revendication 11 ou 12, caractérisé en ce que des moyens sont prévus dans le dispositif de simulation de terminal (2₀, 2₁) pour s'alimenter à partir d'un courant de téléalimentation (IA) prélevé dans le bus (4).

## Patentansprüche

1. Digital-Abschlußemulator für Telekommunikationsnetze zur Übertragung und zum Empfang von digitalen Testrastern (TD, TM), um insbesondere die Eigenschaften eines Busses (4) für die Teilnehmerverwaltung zu kontrollieren und zu messen, dadurch gekennzeichnet, daß er folgende Einrichtungen aufweist:
- Einrichtungen (1054) zum Multiplexen von ersten digitalen Testworten (MD) in abgehenden Testrastern (TD),
- Einrichtungen zur Leitungsübertragung (1056), die mit dem Bus (4) verbunden sind, um in diesem die abgehenden Raster (TD) zu mit dem Bus (4) verbundenen und nach dem Echoprinzip arbeitenden Regelendeinrichtungen (2₀, 2₁) zu übertragen,
- Leitungsempfangseinrichtungen (1057), die mit dem Bus (4) verbunden sind, zum Empfang ankommender Testraster (TM), die von den Endeinrichtungen (2₀, 2₁) als Antwort auf den Empfang der abgehenden Raster (TD) übertragen werden,
- Einrichtungen (1055) zum Demultiplexen der ankommenden Raster (TM) in zweite digitale Testworte (MM),
- eine Zeitbasis (1059) zur Abgabe von Übertragungstaktgebern (HT) und Empfangstaktgebern (HR), die jeweils für die Multiplexeinrichtungen (1054) und für die Demultiplexeinrichtungen (1055) bestimmt sind,
- interne Kontrolleinrichtungen (1050, 1050a , die mit den Multiplexeinrichtungen (1054) und Demultiplexeinrichtungen (1055) verbunden sind, und eine Zeitbasis (1059) zur Steuerung der Funktionsweise dieser Elemente als Funktion von Steuerbefehlen, die von einem Operator (1050a) gegeben werden, und
- interne Verarbeitungseinrichtungen (1050), die die ersten Worte (MD) abgeben und die zweiten Worte (MM) empfangen, zur Verarbeitung der zweiten Worte als Funktion der ersten Worte, um defekte Telekommunikationsverbindungen zwischen dem Emulator (105) und den Endeinrichtungen (2₀, 2₁) festzustellen und um die gesuchten Eigenschaften des Busses (4) abzuleiten.

2. Emulator nach Anspruch 1, dadurch gekennzeichnet, daß die Zeitbasis (1059) von den Kontrolleinrichtungen (1050) gesteuerte Einrichtungen (1059b - 1059d) zur Erzeugung einer Vielfalt (J) von Taktsignalen (HR₁ - HR₃), die paarweise um einen Bruchteil des Bitzeitintervalls mit vorgegebener Dauer (t/J) verschoben sind, und zur Auswahl der Übertragungstaktgeber (HT) und der Empfangstaktgeber (HR) aus diesen Zeitsignalen, und von den Kontrolleinrichtungen (1050) gesteuerte Einrichtungen (1059e) zum Einfügen von mindestens einem zusätzlichen Zeitimpuls (IH) in den Empfangstaktgeber (HR) aufweist, um das Demultiplexen der ankommenden Raster (TM) um mindestens eines dieser Bruchteile des Bitzeitintervalls zu verschieben, wobei die Einrichtungen zur Erzeugung und zum Einfügen (1059b - 1059d, 1059e) von den Kontrolleinrichtungen (1050) so gesteuert werden, daß der Empfangstaktgeber (HR) bezüglich des Übertragungstaktgebers (HT) zunehmend verschoben und zusätzliche Zeitimpulse (IH) eingefügt werden bis zu einem optimalen Empfang der ankommenden Raster (TM).

3. Emulator nach Anspruch 1 oder 2, dadurch gekennzeichnet, daß er mit den Multiplexeinrichtungen (1054) und Demultiplexeinrichtungen (1055), der Zeitbasis (1059) und den Kontrolleinrichtungen (1050) verbundene Einrichtungen (1051 - 1053) zum Verbinden des Emulators (105) mit äußeren Kontroll- und Verarbeitungseinrichtungen (100) auf- weist, wobei die Einrichtungen (1051 - 1053) dazu bestimmt sind, die ersten Worte (MD) an diese äußeren Einrichtungen zu liefern und die zweiten Worte (MM) von diesen Einrichtungen zu empfangen.

4. Emulator nach einem der Ansprüche 1 bis 3, dadurch gekennzeichnet, daß er Einrichtungen (1054e, 1055a) zur direkten Abgabe der abgehenden Raster (TD) auf den Eingang der Demultiplexeinrichtungen (1055) aufweist, um das Testen der Funktionsweise der verschiedenen Elemente des Emulators (105) mit Hilfe der Kontrolleinrichtungen (1050, 100) zu erlauben.

5. Emulator nach einem der Ansprüche 1 bis 4, dadurch gekennzeichnet, daß er Einrichtungen zum Dialog Mensch-Maschine (1050a) aufweist, die mit den Kontrolleinrichtungen verbunden sind.

6. Emulator nach einem der Ansprüche 1 bis 5, dadurch gekennzeichnet, daß er Einrichtungen (1058, 1056b, 1057b) zur Übertragung eines Fernspeisestroms (EA) über den Bus (4) zu den Endeinrichtungen (2₀, 2₁) aufweist.

7. System zur Kontrolle und zur Messung der Eigenschaften eines Teilnehmerverwaltungsbusses, wobei der Bus (4) eine Vielzahl Verbindungsstecker (3₀ - 3_{N}) zur Verbindung des Busses (4) mit einer digitalen Endschaltung eines Telekommunikationsnetzes und mit einer Vielzahl von Datenendeinrichtungen aufweist, dadurch gekennzeichnet, daß das System eine Hauptvorrichtung (1), die mit dem Bus (4) vorzugsweise an der Stelle der digitalen Endschaltung des Netzes (NT) verbunden ist, und einen Emulator (105) entsprechend einem der Ansprüche 1 bis 6 und wenigstens eine Einrichtung zur Simulation der mit dem Bus (4) verbundenen Datenendschaltung (2₀, 2₁) zur Simulation der Tätigkeit einer Datenendschaltung, wenn der Emulator (105) des Systems aktiv ist, und zur Übertragung ankommender Testraster (TM) als Antwort auf die abgehenden Testraster (TD), die vom Emulator (105) übertragen werden aufweist, und das System Verarbeitungseinrichtungen (100) aufweist, die dafür programmiert sind, die Fehlerrate der Übertragung für jede der Telekommunikationsverbindungen anhand des ersten und zweiten Wortes (MD, MM), die während einer vorgegebenen Zeitperiode übertragen und empfangen werden, zu berechnen.

8. System nach Anspruch 7, dadurch gekennzeichnet, daß die Hauptvorrichtung (1) außer dem Emulator (105) erste Einrichtungen (102) zur Messung der Widerstandswerte und der galvanischen Isolierung im Bus (4), zweite Einrichtungen (104) zur Messung der Nebensprechrate zwischen Übertragungspaaren des Busses (4) und Einrichtungen (103) zur Erkennung des Vorhandenseins möglicher Gleichspannungs- und/oder Wechselspannungsstörungen aufweist.

9. System nach Anspruch 8, bei dem die Hauptvorrichtung (1) auch eine Verbindungsmatrix (101) mit ersten Zugängen (101a - 101h), die mit dem Bus (4) verbunden sind, und mit zweiten Zugängen (101i - 101r), die mit den ersten und zweiten Einrichtungen zur Messung (102, 104), mit den Einrichtungen zur Detektierung (103) und mit dem Emulator (105) verbunden sind, und Einrichtung (100) zur Kontrolle der Funktionsweise jedes der Elemente (101 - 105) der Hauptvorrichtung (1) und zur Verarbeitung der von diesen Elementen abgegebenen Informationen (102 - 105) aufweist.

10. System nach Anspruch 9, dadurch gekennzeichnet, daß die Einrichtungen zur Kontrolle und zur Verarbeitung (100) Einrichtungen für den Dialog Mensch-Maschine (11, 13) vorzugsweise in Form eines Videotext-Endgerätes vom Typ Minitel (11), mit dem gegebenenfalls ein Drucker (13) verbunden ist, aufweist.

11. System nach einem der Ansprüche 7 bis 10, dadurch gekennzeichnet, daß eine Einrichtung zur Simulation der Endschaltung (2₀, 2₁) Einrichtungen zum Demultiplexen (22) der Worte und Bits (B1, B2, D) der Telekommunikationskanäle, die von den abgehenden Rastern (TD) übermittelt werden, aufweist zur Auswahl dieser Worte und Bits (B1, B2, D) und zu ihrem Multiplexen in ankommenden Rastern (TM), um als Echo zum Emulator (105) die Kanäle zu übertragen, die den ausgewählten Worten und Bits (B1, B2, D) entsprechen.

12. System nach Anspruch 11, dadurch gekennzeichnet, daß eine Einrichtung zur Simulation der Endschaltung (2₀, 2₁) auch Einrichtungen (22) zur Detektierung von Serviceinformationen (VT) in den abgehenden Rastern (TD), die durch den Emulator (105) übertragen werden und die anzeigen, daß der Empfang der ankommenden Raster (TM) auf der Ebene des Emulators (105) korrekt ist, und Einrichtungen (V1) zur Darstellung der Serviceinformationen (VTa), die zur Einrichtung (2₀, 2₁) übertragen werden, aufweist.

13. System nach Anspruch 11 oder 12, dadurch gekennzeichnet, daß die Einrichtungen in der Vorrichtung zur Simulation der Endschaltung (2₀, 2₁) vorgesehen sind, um von einem Fernspeisungsstrom (IA), der dem Bus (4) entnommen wird, gespeist zu werden.

## Claims

1. A digital termination emulator in a telecommunication network for transmitting and receiving digital test frames (TD, TM) in order inter alia to monitor and measure the characteristics of a bus (4) in a subscriber's control station, characterised in that it comprises
means (1054) for multiplexing first digital test words (MD) into descending test frames (TD),
line transmission means (1056) connected to the bus (4) for transmitting the descending frames (TD) along the bus to echo-operating looping devices (2₀, 2₁) connected to the bus (4),
line reception means (1057) connected to the bus (4) in order to receive rising test frames (TM) transmitted by the terminal devices (2₀, 2₁) in response to reception of the descending frames (TD),
means (1055) for demultiplexing the rising frames (TM) into second digital test words (MM),
a time base (1059) for producing transmission clocks (HT) and reception clocks (HR) intended for the multiplexing means (1054) and demultiplexing means (1055) respectively,
internal monitoring means (1050, 1050a) connected to the multiplexing means (1054) and demultiplexing means (1055) and to the time base (1059) in order to monitor the operation of these components in accordance with commands delivered by an operator (1050a), and
internal processing means (105) delivering the first words (MD) and receiving the second words (MM) in order to process the second words in dependence on the first words so as to detect defective telecommunication connections between the emulator (105) and the terminal devices (2₀, 2₁) and to deduce the desired characteristics of the bus (4).

2. An emulator according to claim 1, characterised in that the time base (1059) comprises means (1059b to 1059d) controlled by the monitoring means (1050) so as to produce a plurality (J) of clock signals (HR₁ to HR₃) offset in pairs by a fraction of a bit time interval having a predetermined duration (t/J) and so as to select the transmission clocks (HT) and reception clocks (HR) from among the aforementioned clock signals, and means (1059e) controlled by the monitoring means (1050) so as to insert at least one additional clock pulse (IH) in the reception clock (HR) in order to offset the demultiplexing of the rising frames (TM) by at least one of the aforementioned fractions of a bit time interval, the means for producing and for inserting (1059b to 1059d, 1059e) being controlled by the monitoring means (1050) so as progressively to offset the reception clock (HR) relative to the transmission clock (HT) and to insert additional clock pulses (IH) until optimum reception of the rising frames (TM).

3. An emulator according to claim 1 or 2, characterised in that it comprises means (1051 to 1053) connected to the multiplexing means (1054) and demultiplexing means (1055) and to the time base (1059) and to the monitoring means (1050) in order to connect the emulator (105) to external monitoring and processing means (100), the means (1051 to 1053) being adapted to supply the first words (MD) to the external means and to receive the second words (MM) coming from these means.

4. An emulator according to any of claims 1 to 3, characterised in that it comprises means (1054e, 1055a) for directly applying the descending frames (TD) to the input of the demultiplexing means (1055) in order to enable the monitoring means (1050, 100) to test the operation of various components of the emulator (105).

5. An emulator according to any of claims 1 to 4, characterised in that it comprises man-machine dialogue means (1050a) associated with the monitoring means.

6. An emulator according to any of claims 1 to 5, characterised in that it comprises means (1058, 1056b, 1057b) for transmitting a remote supply current (IA) via the bus (4) to the terminal devices (2₀, 2₁).

7. A system for monitoring and measuring the characteristics of a subscriber's control centre bus, the bus (4) comprising a plurality of connecting sockets (3₀ to 3_{N}) for connecting the bus (4) to a digital termination (NT) of a telecommunications network and to a plurality of terminals, characterised in that the system comprises a main unit (1) connected to the bus (4), preferably instead of the digital network termination (NT) and including an emulator (105) according to any of claims 1 to 6 and at least one device for simulating the terminal (2₀, 2₁) connected to the bus (4) in order to simulate the activity of a terminal when the emulator (105) in the system is operative and to transmit rising test frames (TM) in response to the descending test frames (TD) transmitted by the emulator (105), the system comprising processing means (100) programmed to calculate the rates of errors in transmission for each telecommunication connection, starting from the first and second words (MD, MM) transmitted and received during a predetermined period of time.

8. A system according to claim 7, characterised in that the main unit (1), in addition to the emulator (105), comprises:
first means (102) for measuring the resistance and galvanic insulation in the bus (4),
second means (104) for measuring the rates of cross-talk between the transmission pairs in the bus (4), and
means (103) for detecting the presence of DC and/or AC interfering potentials in the bus (4).

9. A system according to claim 8, in that the main unit (1) also comprises
a switching matrix (101) having first accesses (101a to 101h) connected to the bus (4) and second accesses (101i to 101r) connected to the first and second measuring means (102, 104), the detecting means (103) and the emulator (105), and
means (100) for monitoring the operation of each of the components (101) to (105) of the main unit (1) and for processing the information delivered by the components (102 to 105).

10. A system according to claim 9, characterised in that the monitoring and processing means (100) comprise man-machine dialogue means (11, 13), preferably in the form of a Minitel-type videotext terminal (11) optionally associated with a printer (13).

11. A system according to any of claims 7 to 10, characterised in that a terminal simulation device (2₀, 2₁) comprises means for demultiplexing into words and bits (B1, B2, D) in the telecommunication channels carried by the descending frames (TD), and for selecting the words and bits (B1, B2, D) and multiplexing them into rising frames (TM) in order to transmit the channels corresponding to the selected words and bits (B1, B2, D) to the emulator (105) by echo.

12. A system according to claim 11, characterised in that a terminal simulation device (2₀, 2₁) also comprises means (22) for detecting service information in the descending frames (TD) transmitted by the emulator (105) and indicating that the reception of the rising frames (TM) is correct at the level of the emulator (105), and means (V1) for transmitting the service information (VTa) transmitted to the device (2₀, 2₁).

13. A system according to claim 11 or 12, characterised in that means are provided in the terminal simulation device (2₀, 2₁) for taking power from a remote supply current (IA) tapped in the bus (4).
